**Europäisches Patentamt**

**European Patent Office**

**Office européen des brevets**

(19)

(11) Veröffentlichungsnummer : **0 420 270 B1**

(12) **EUROPÄISCHE PATENTSCHRIFT**

(45) Veröffentlichungstag der Patentschrift :
30.11.94 Patentblatt 94/48

(51) Int. Cl.⁵ : **H02J 13/00**

(21) Anmeldenummer : **90118685.8**

(22) Anmeldetag : **28.09.90**

(54) **Rundsteuersendeeinrichtung.**

(30) Priorität : **29.09.89 DE 3932591**

(43) Veröffentlichungstag der Anmeldung :
**03.04.91 Patentblatt 91/14**

(45) Bekanntmachung des Hinweises auf die
Patenterteilung :
**30.11.94 Patentblatt 94/48**

(84) Benannte Vertragsstaaten :
**AT BE CH DE LI NL**

(56) Entgegenhaltungen :
**FR-A- 2 293 096**
**SIEMENS REVIEW, Bd. 44, Nr. 3, März 1977,**
**ERLANGEN DE, Seiten 99-103 ; H. HOFMEI-**
**STER et al. : "AF Ripple Control Transmitter**
**for Primary Distribution Systems"**

(56) Entgegenhaltungen :
**TECHNISCHE MITTEILUNGEN AEG TELEFUN-**
**KEN, Bd. 61, Nr. 5, 1971, BERLIN DE, Seiten**
**289-292 ; G. BEINHOLD et al. : "Statische**
**Umrichter in Rundsteuerlagen"**

(73) Patentinhaber : **SIEMENS**
**AKTIENGESELLSCHAFT**
**Wittelsbacherplatz 2**
**D-80333 München (DE)**

(72) Erfinder : **Hilbich, Gerhard, Dipl.-Ing. (FH)**
**Friedrich-Bauer-Strasse 7**
**D-8520 Erlangen (DE)**
Erfinder : **Müller, Manfred**
**Thumenberger Weg 5**
**D-8500 Nürnberg (DE)**
Erfinder : **Weiss, Helmut, Dr.**
**Rennestrasse 23**
**D-8520 Erlangen (DE)**

## Beschreibung

Die Erfindung betrifft eine Rundsteuersendeeinrichtung, welche Steuerbefehle in ein elektrisches Energieversorgungsnetz einspeist.

Die aus Steuerbefehlen für Betriebsmittel, welche in dem zur elektrischen Energieversorgung dienenden Netz verteilt sind, bestehende Information wird bevorzugt im Inneren der Rundsteuersender auf eine Leitfrequenz aufgeprägt. Hierzu sind am Eingang der Rundsteuersender zusätzliche Tonfrequenzgeneratoren vorhanden. Die so entstandene Rundsteuertonfrequenz wird anschließend in das Netz eingespeist. Bei manchen Einrichtungen sind in mehreren, unter Umständen räumlich weit voneinander getrennten, Unterstationen mehrere Rundsteuersender angeordnet und speisen parallel in das Netz bzw. Teilbereiche desselben ein. Zur Sicherstellung der Parallelarbeit der Rundsteuersender ist es notwendig, diesen möglichst phasengleiche, identische Leitfrequenzistwerte am Eingang zur Verfügung zu stellen. Der Leitfrequenzistwert für alle Sender wird in aller Regel in einer sogenannten Zentralstation gebildet und den Rundsteuersendern in den einzelnen Unterstationen bevorzugt per Kabel mittels Übertragungseinrichtungen zugeführt.

Bei derartigen Übertragungen des zentral gebildeten Leitfrequenzistwertes über größere Entfernungen können zum einen Störungen auftreten. Zum anderen wird die Leitfrequenz häufig gemeinsam mit den zu übertragenden Steuerdaten kodiert übertragen. Ein bekanntes Verfahren hierzu ist die Übertragung mit Hilfe der Wechselstromtelegraphie. Dabei wird auf dem Wege einer sogenannten Frequenzumtastung auf der Sendeseite der Übertragungseinrichtung die zu übertragende Leitfrequenz zunächst um einen ganzzahligen Faktor reduziert, z.B. auf den 40-ten Teil des ursprünglichen Wertes, und anschließend freilaufend, d.h. nicht synchron zu den Flanken des Leitfrequenzistwertes der Zentralstation, abgetastet. Beträgt beispielsweise der Nennwert der in der Zentralstation gebildeten Leitfrequenz 750 Hz, so wird dieser Wert zunächst auf den 40-ten Teil, d.h. 18,75 Hz, reduziert und nach der Frequenzumtastung beispielsweise mit einer Datenübertragungsrate von 100 Baud auf einem Übertragungskabel zu einer oder mehreren Unterstationen übertragen. Dort wird auf der Empfangsseite der Übertragungseinrichtung zunächst der reduzierte Frequenzwert, z.B. 18,75 Hz, durch Demodulation wiedergewonnen und anschließend der ursprüngliche Istwert der Leitfrequenz, z.B. 750 Hz, auf dem Wege einer Frequenzvervielfachung reproduziert.

Hierbei ist es nicht zu vermeiden, daß der reproduzierte Leitfrequenzistwert mit Phasen- bzw. Frequenzsprüngen belastet ist. Dies hat seine Ursache zum einen darin, daß auf der Sendeseite der Übertragungseinrichtung der reduzierte Leitfrequenzistwert asynchron abgetastet wird. Hierdurch treten gegenüber dem Ursprungssignal schwankende Phasenabweichungen auf. Zum anderen werden auf der Empfangsseite die aufgrund der asynchronen Abtastung unterschiedlich langen Signalperioden zur Reproduktion jeweils in eine Vielzahl von gleich langen Teilperioden aufgeteilt. Deren Anzahl entspricht dem Kehrwert des Faktors, mit dem der Leitfrequenzistwert auf der Sendeseite reduziert wurde. Hierdurch bedingt treten im Verlauf des reproduzierten Leitfrequenzistwertes am Ausgang der Übertragungseinrichtung Phasen-bzw. Frequenzsprünge auf. Derartige Störungen in dem dem jeweiligen Rundsteuersender zugeführten Leitfrequenzistwert können von der Frequenzregelung der internen Tonfrequenzgeneratoren nicht in allen Fällen ausgeglichen werden. Vielmehr reagiert der Sender hierauf unter Umständen mit Phasensprüngen von ca. 180° im Ausgangssignal. Hiermit versucht der Sender in den Fällen, in denen die interne Regelung den Phasen- bzw. Frequenzsprüngen des Leitfrequenzistwertes nicht mehr folgen kann, sprungartig Synchronität zwischen den Signalen am Ein- und Ausgang wieder herzustellen.

Zur Dämpfung der Auswirkungen von derart belasteten Rundsteuersignalen müssen umfangreiche Filtervorrichtungen vorgesehen werden. Diese können in der Unterstation zwischen dem Ausgang der Übertragungseinrichtung und dem Eingang des Rundsteuersenders angeordnet sein. Desweiteren ist es unter Umständen auch notwendig, derartige Filter am Eingang der im Netz verteilten Betriebsmittel vorzusehen, welche mit der vom Rundsteuersender im Netz übertragenen Information versorgt werden. Derartige Filter dämpfen aber die Signalübertragung und haben eine verschlechterte Ansprechempfindlichkeit der rundsteuersignalbetätigten Betriebsmittel zur Folge.

Wird die Leitfrequenz von mehreren Rundsteuersendern in unterschiedliche Netzbereiche eingespeist, so treten die zum Zwecke der Aufrechterhaltung der Synchronität mit dem Leitfrequenzistwert am Eingang des Rundsteuersenders dienenden Phasensprünge am Ausgang der einzelnen Sender nicht gleichzeitig auf. Dies kann dann, wenn einzelne Netzbereiche aufgrund von z.B. vorübergehenden Schaltmaßnahmen miteinander gekoppelt werden dazu führen, daß die von den Tonfrequenzgeneratoren der einzelnen Rundsteuersendern eingespeisten Tonfrequenzen kurzzeitig zueinander in Phasenopposition stehen. Abhängig von der jeweiligen Netzstruktur, dem Abstand der Leitfrequenzeinspeisepunkte und den dazwischen angeordneten Netzbetriebsmitteln können in einem solchen Fall Auslöschungen der Rundsteuertonfrequenz bzw. sogar kurzschlußartige Ausgleichsströme zwischen den Ausgängen der Sender in den einzelnen Unterstationen auftreten. Dabei kann es zum einen zu Verlust an Rundsteuerinformationen kommen. Desweiteren besteht die Gefahr der Abschaltung bzw. sogar Zerstörung einzelner Rundsteuersender. Derartige Probleme treten besonders dann auf, wenn mehrere Rundsteuersender in einer einzigen Unterstation parallel in mehrere, dort zusammenlaufende Netzteilbereiche einspeisen und dort über eine gemeinsame Sammelschiene miteinander gekoppelt sind. Verursachen hierbei zeitversetzte Phasensprünge an den Ausgängen der Sender vorübergehend auf der Netzseite Phasenoppositionen der eingespeisten Rundsteuertonfrequenz, so sind in aller Regel Kurzschlüsse zwischen den benachbarten Rundsteuersendern und deren Zerstörung nicht zu vermeiden.

Der Erfindung liegt die Aufgabe zugrunde eine Rundsteuersendeeinrichtung anzugeben, welche die Leitfrequenz bei Vorhandensein von mehreren Einspeisepunkten in jedem Fall phasensprunglos parallelen Rundsteuersendern zuführt, so daß diese die Rundsteuertonfrequenz ebenfalls phasensprunglos in das jeweilige Netz bzw. den Netzteilbereich einspeisen können.

Die Aufgabe wird gelöst mit Hilfe der Rundsteuersendeeinrichtung von Anspruch 1.

Diese hat zum einen den Vorteil, daß auch bei vorübergehendem Ausfall bzw. einer Störung der Übertragung des Leitfrequenzistwertes von der Zentral- zur Unterstation in jedem Fall ein definierter Leitfrequenzistwert zur Führung der mindestens zwei parallelen Rundsteuersender zur Verfügung steht. Ein weiterer Vorteil besteht darin, daß in dem übertragenen und reproduzierten Leitfrequenzistwert enthaltene Phasen- und Frequenzsprünge aufgrund der erfindungsgemäßen Neugenerierung des Leitfrequenzistwertes soweit reduziert werden, daß die Tonfrequenzgeneratoren im Inneren der Rundsteuersender ohne Verlassen des zur Verfügung stehenden Regelbereiches zum Ausgleich von Phasen- bzw. Frequenzschwankungen in jedem Fall im sicheren Arbeitsbereich betrieben wird.

In den Unteransprüchen sind vorteilhafte Ausführungsformen insbesondere von Teilen der erfindungsgemäßen Rundsteuersendeeinrichtung enthalten. Die Erfindung und deren bevorzugte Ausführungsformen werden desweiteren anhand der nachfolgend kurz angeführten Figuren näher erläutert. Dabei zeigt:

FIG 1    ein Blockschaltbild der erfindungsgemäßen Rundsteuersendeeinrichtung beispielhaft mit zwei parallel arbeitenden Rundsteuersendern in einer Unterstation,

FIG 2    ein Blockschaltbild eines Leitfrequenzgenerators, welche besonders vorteilhaft in der Rundsteuersendeeinrichtung gemäß FIG 1 verwendet werden kann,

FIG 3    die Darstellung der Funktion eines im Leitfrequenzgenerator gemäß FIG 2 vorhandenen Sollwertbildners in Form eines Flußdiagrammes,

FIG 4    die Darstellung der Funktion einer ersten vorteilhaften Ausführungsform des Sollwertbildners von FIG 3 in Form eines Flußdiagrammes,

FIG 5    die Darstellung der Funktion einer zweiten vorteilhaften Ausführungsform des Sollwertbildners von FIG 3 in Form eines Flußdiagrammes, und

FIG 6    eine besonders vorteilhafte Ausführungsform eines Teiles des Sollwertbildners von FIG 5.

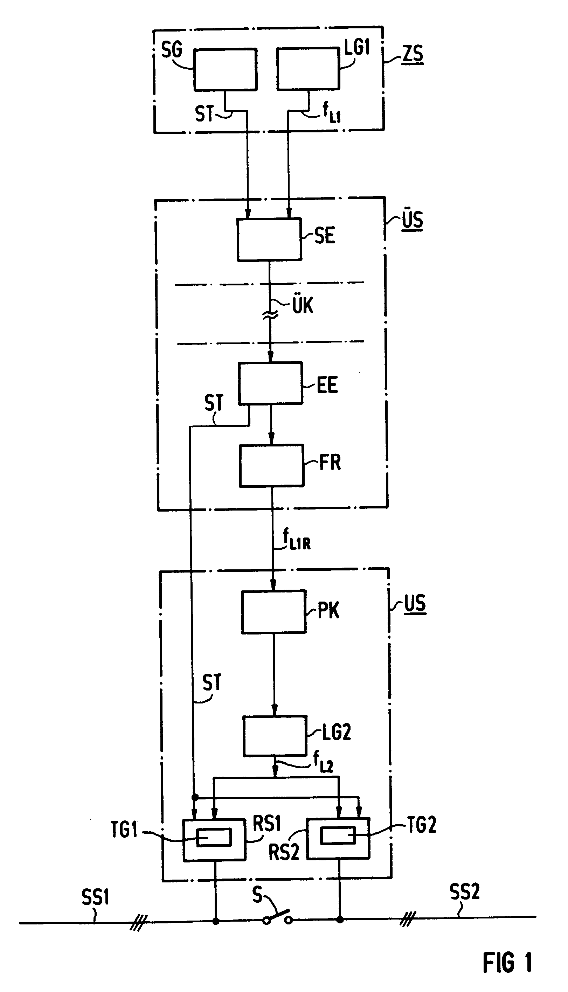

Bei dem in der FIG 1 dargestellten Blockschaltbild der erfindungsgemäßen Rundsteuersendeeinrichtung wird ein Leitfrequenzistwert $f_{L1}$ von einem ersten Leitfrequenzgenerator LG1 in einer Zentralstation ZS gebildet. In der Regel werden dort auch bevorzugt über einen weiteren Steuergenerator SG die Steuerbefehle ST für die im Netz verteilten Betriebsmittel gebildet. Beide Größen werden in dem in der FIG 1 dargestellten Beispiel von einer Übertragungseinrichtung ÜS an eine Unterstation US weitergegeben, in der beispielhaft zwei Rundsteuersender RS1, RS2 Rundsteuerinformation parallel in die Sammelschienen SS1, SS2 von zwei Netzteilbereichen einspeisen.

Die Übertragungseinrichtung ÜS enthält am Eingang eine Sendeeinrichtung SE, an die sich die eigentliche Übertragungsstrecke ÜK anschließt. Die Übertragungsstrecke wird durch eine Empfangseinrichtung EE abgeschlossen, an die sich eine Einrichtung FR zur Reproduzierung des Leitfrequenzistwertes $f_{L1R}$ anschließt. In der Regel werden die Steuerbefehle ST separat vom Leitfrequenzistwert am Ausgang der Empfangseinrichtung EE rückgewonnen.

Der reproduzierte Leitfrequenzistwert $f_{L1R}$ und die reproduzierten Steuerbefehle werden desweiteren einer Unterstation US zur weiteren Bearbeitung zugeführt. So ist der reproduzierte Leitfrequenzistwert $f_{L1R}$ in der oben beschriebenen Weise mit Phasen-bzw. Frequenzsprüngen belastet. Diese werden erfindungsgemäß mittels eines zweiten, den beiden Rundsteuersendern RS1, RS2 möglichst unmittelbar vorgeschalteten Leitfrequenzgenerator LG2 reduziert. Dieser generiert einen neuen Leitfrequenzistwert $f_{L2}$ unter Zuhilfenahme des reproduzierten Leitfrequenzistwertes $f_{L1R}$ am Eingang als Synchronisiermittel. Der neu generierte Leitfrequenzistwert $f_{L2}$ enthält nur noch solche Frequenzabweichungen, welche innerhalb des sicheren Arbeitsbereiches der Tonfrequenzgeneratoren TG1, TG2 am Eingang der Rundsteuersender RS1, RS2 liegend von deren Regelung phasensprunglos ausgeglichen werden können. Auf diese Weise werden auf der Netzseite der Rundsteuersender selbst dann kurzschlußartige Ausgleichsströme vermieden, wenn die beiden Sammelschienen SS1 und SS2 der dazugehörigen Netzbereiche durch einen Schalter S miteinander verkoppelt werden. Die Erfindung hat desweiteren den Vorteil, daß spezielle Filtereinrichtungen auf der Eingangsbzw. Ausgangsseite der Rundsteuersender zur Dämpfung der Auswirkungen von Phasen- bzw. Frequenzsprüngen ge-

3

gebenenfalls entfallen können. Bei der in der FIG 1 dargestellten vorteilhaften Ausführungsform ist am Eingang der Unterstation US lediglich ein fest eingestellter Phasenkompensator PK vorgesehen. Mit dessen Hilfe ist eine statische Vorkompensation einer beispielsweise von der Übertragungsstrecke ÜK hervorgerufenen Phasendrehung möglich. Schließlich werden in der Unterstation US der neu generierte Leitfrequenzistwert und die Steuerbefehle den Rundsteuersendern zugeführt und von diesen gemeinsam als sogenannte Tonfrequenz in die Sammelschienen eingespeist.

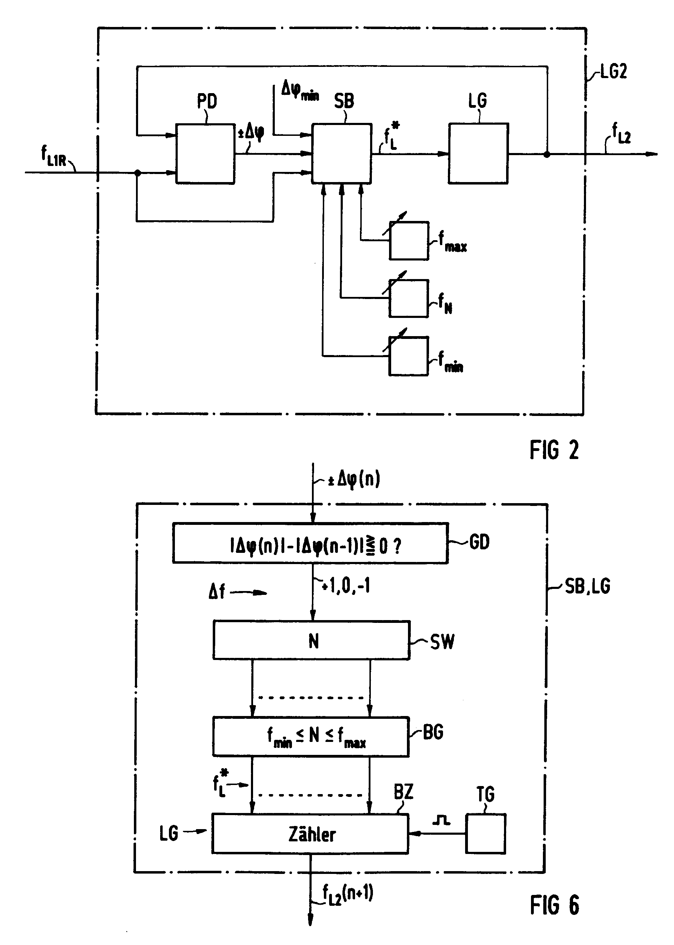

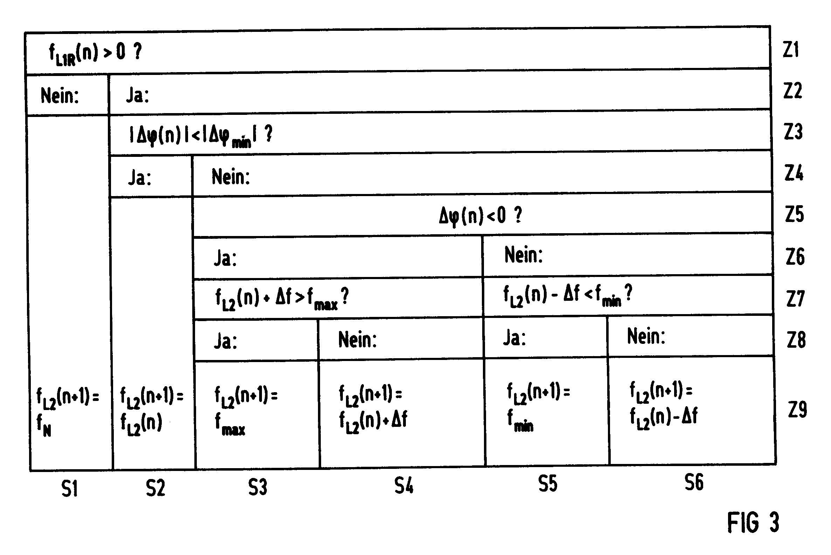

Eine besonders vorteilhafte Ausführungsform des Leitfrequenzgenerators zur phasensprunglosen Neugenerierung eines reproduzierten Leitfrequenzistwertes gemäß FIG 1 wird desweiteren anhand des Blockschaltbildes gemäß der FIG 2 und des dazugehörigen Flußdiagrammes gemäß der FIG 3 näher erläutert. Der neu generierte Leitfrequenzistwert $f_{L2}$ wird dabei von einem internen Leitfrequenzgenerator LG gebildet, welcher mit Hilfe eines Sollwertes $f_L^*$ einstellbar ist. Zur Bildung dieses Sollwertes erfaßt zunächst ein Phasendetektor PD am Eingang des Leitfrequenzgenerators LG2 die Phasenabweichung $\pm\Delta\varphi$ des neu generierten Leitfrequenzistwertes $f_{L2}$ vom ursprünglichen, bevorzugt durch eine Übertragungseinrichtung übertragenen und reproduzierten Leitfrequenzistwert $f_{L1R}$. Ein sich anschließender Sollwertbildner SB für den Sollwert $f_L^*$ wertet die Phasenabweichung $\pm\Delta\varphi$ insbesondere unter Zuhilfenahme der Vorgabewerte $f_{max}$ und $f_{min}$ aus. Diese beiden Werten entsprechen dem bevorzugt um die Nennfrequenz $f_N$, welche bevorzugt ebenfalls als Vorgabewert dem Sollwertbildner SB zugeführt wird, liegenden Frequenzregelbereich des Tonfrequenzgenerators des jeweiligen Rundsteuersenders. Innerhalb diesem Bereich kann der Tonfrequenzgenerator der Sender Frequenzabweichungen ausregeln, ohne zur Aufrechterhaltung der Synchronität mit dem Eingangssignal Phasensprünge in das Ausgangssignal einschieben zu müssen.

Gemäß der Darstellung von FIG 3 erniedrigt bzw. erhöht der Sollwertbildner SB den Sollwert $f_L^*$, und damit auch der interne Leitfrequenzgenerator LG den Wert der neu generierten Leitfrequenz $f_{L2}$, bei Vorliegen einer Vor- bzw. Nacheilung der Phasenabweichung. Im Flußdiagramm der FIG 3, in dem die Funktion des Leitfrequenzgenerators LG2 für einen aktuellen Bearbeitungszyklus n dargestellt ist, entspricht dies der Entscheidung

$$\Delta\varphi\,(n) < 0\ ?$$

in Zeile Z5. Wird die Frage positiv beantwortet, d.h. bei Vorliegen einer Phasennacheilung des neu generierten Leitfrequenzistwertes $f_{L2}$, wird gemäß FIG 3, Zeile Z9, Spalte S4 der Leitfrequenzistwert $f_{L2}\,(n+1)$ im folgenden Bearbeitungszyklus n+1 um einen Betrag $\Delta f$ erhöht, d.h.

$$f_{L2}(n + 1) = f_{L2}(n) + \Delta f\,.$$

Andernfalls wird bei Vorliegen einer Phasenvoreilung gemäß FIG 3, Zeile Z9, Spalte S6 der Leitfrequenzistwert im folgenden Bearbeitungszyklus n+1 um den Betrag reduziert, d.h.

$$f_{L2}(n + 1) = f_{L2}(n) - \Delta f\,.$$

Es ist vorteilhaft, wenn entsprechend den beiden Entscheidungen in Zeile Z7, d.h.

$$f_{L2}(n) + \Delta f > f_{max}\ ?$$

bzw.

$$f_{L2}(n) - \Delta f < f_{min}\ ?$$

überprüft wird, ob durch die Erhöhung bzw. Erniedrigung des aktuellen Wertes $f_{L2}(n)$ des Leitfrequenzistwertes um den Betrag der durch die Grenzwerte $f_{max}$, $f_{min}$ gegebene Regelbereich des Rundsteuersenders verlassen wird. Ist dies der Fall, so wird der Leitfrequenzistwert $f_{L2}(n+1)$ für den folgenden Bearbeitungszyklus gemäß FIG 3, Zeile Z9, Spalte S3 bzw. Spalte S5 auf diese Werte begrenzt, d.h.

$$f_{L2}(n + 1) = f_{max}$$

bzw.

$$f_{L2}(n + 1) = f_{min}\,.$$

Die Größe des Betrages $\Delta f$ kann somit im Bereich

$$0 \leqq \Delta f \leqq f_{max} - f_{min}$$

liegen, wobei $f_{max} - f_{min}$ der Regelbereich des Rundsteuersenders ist.

Es ist vorteilhaft entsprechend der Frage

$$f_{L1R}(n) > 0\ ?$$

in FIG 3, Zeile Z1 den dem Leitfrequenzgenerator LG2 von außen zugeführten, insbesondere reproduzierten Leitfrequenzistwert $f_{L1R}$ auf Unterbrechungen zu überwachen. Sei vorübergehendem Ausfall dieses Wertes wird der Sollwert $f_L^*$, und damit auch der Wert der neu generierten Leitfrequenz, zumindest während des folgenden Bearbeitungszyklusses n+1 auf den Nennwert $f_N$ der Leitfrequenz gesetzt, d.h. gemäß FIG 3, Zeile Z9, Spalte S1

$$f_{L2}(n + 1) = f_N\,.$$

Gemäß einer weiteren Ausführungsform der Erfindung wird bei Vorliegen eines Leitfrequenzistwertes $f_{L1R}$ eine Korrektur des Sollwertes $f_L^*$ und damit des neu generierten Leitfrequenzistwertes $f_{L2}$ nur dann zugelassen, wenn entsprechend der Frage in FIG 3, Zeile Z3

$$|\Delta\varphi(n)| < |\Delta\varphi_{min}| \,?$$

der Betrag der Phasenabweichung am Ausgang des Phasendetektors PD einen vorgebbaren Minimalwert $|\Delta\varphi_{min}|$ überschritten hat.

Andernfalls wird gemäß FIG 3, 4 und 5, Spalte S2 der neu generierte Leitfrequenzistwert auch im folgenden Bearbeitungszyklus nicht verändert, d.h.

$$f_{L2}(n + 1) \;=\; f_{L2}(n)\,.$$

Der vorgebbare Minimalwert $|\Delta\varphi_{min}|$ kann somit unter der Bedingung

$$0 \leqq |\Delta\varphi_{min}|$$

vorgegeben werden und hat bevorzugt einen Wert von kleiner als 10°.

Gemäß einer ersten Ausführungsform des Sollwertbildners SB wird der Betrag $\Delta f$ so groß gewählt, daß er entweder dem Abstand des oberen Grenzwertes $f_{max}$ des Regelbereiches des Rundsteuersenders von Frequenznennwert, oder dem Abstand Frequenznennwertes $f_N$ vom unteren Grenzwert $f_{min}$ des Regelbereiches des Rundsteuersenders entspricht. Abhängig vom Vorliegen einer Vor- bzw. Nacheilung der Phasenabweichung werden die Größen $f_L^*$ und $f_{L2}$ somit zwischen den Werten

$$f_{min}, f_n, f_{max}$$

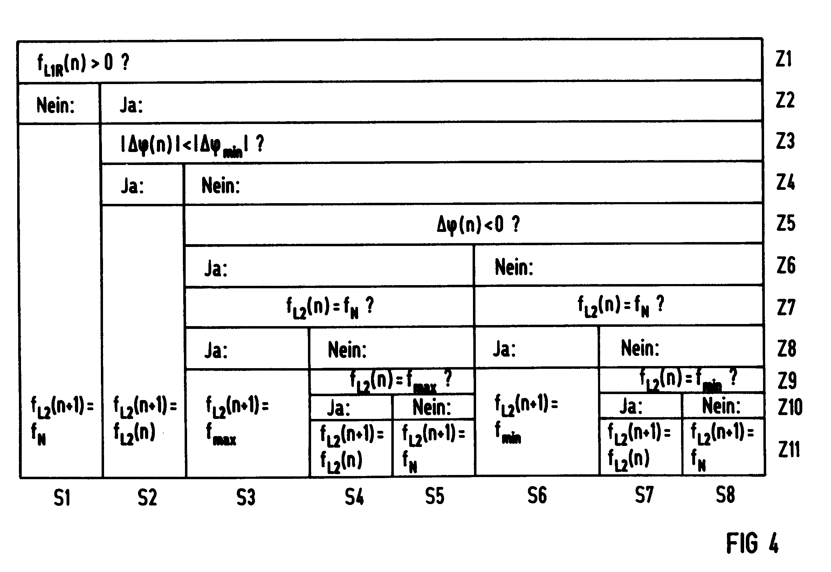

umgeschaltet. Dies wird desweiteren anhand der FIG 4, Zeilen Z6 bis Z11 und Spalten S3 bis S8 näher erläutert.

Wird aufgrund der Frage in Zeile Z5 eine Phasennacheilung von $f_{L2}(n)$ detektiert, d.h. wird die Frage

$$\Delta\varphi\,(n) < 0\,?$$

mit ja beantwortet, so wird abhängig von der ersten Unterfrage in Zeile Z7, Spalte S3 bis S5, ob der aktuelle Leitfrequenzistwert dem Frequenznennwert entspricht, d.h.

$$f_{L2}(n) \;=\; f_N\,? \,,$$

bei Vorliegen der positiven Antwort gemäß Spalte S3 der Leitfrequenzistwert für den folgenden Bearbeitungszyklus n+1 auf dem oberen Grenzwert des Regelbereiches erhöht, d.h.

$$f_{L2}(n + 1) \;=\; f_{max}\,.$$

Bei Vorliegen einer negativen Antwort wird abhängig von der zweiten Unterfrage in Zeile Z9, Spalte S4 bis S5, ob der aktuelle Leitfrequenzistwert dem oberen Grenzwert $f_{max}$ entspricht, bei positiver Antwort gemäß Spalte S4 der Leitfrequenzistwert für den folgenden Bearbeitungszyklus n+1 unverändert gelassen, d.h.

$$f_{L2}(n + 1) \;=\; f_{L2}(n),$$

andernfalls bei negativer Antwort gemäß Spalte S5 vom Wert $f_{min}$ auf den Nennwert erhöht, d.h.

$$f_{L2}(n + 1) \;=\; f_N\,.$$

Wird aufgrund der Frage in Zeile Z5 eine Phasenvoreilung von $f_{L2}(n)$ detektiert, d.h. wird die Frage

$$\Delta\varphi\,(n) < 0\,?$$

mit nein beantwortet, so wird abhängig von der ersten Unterfrage in Zeile Z7, Spalte S6 bis S8, ob der aktuelle Leitfrequenzistwert dem Frequenznennwert entspricht, d.h.

$$f_{L2}(n) \;=\; f_N\,? \,,$$

bei Vorliegen einer positiven Antwort gemäß Spalte S6 der Leitfrequenzistwert für den folgenden Bearbeitungszyklus n+1 auf den unteren Grenzwert des Regelbereiches erniedrigt, d.h.

$$f_{L2}(n + 1) \;=\; f_{min}\,.$$

Bei Vorliegen einer negativen Antwort wird abhängig von der zweiten Unterfrage in Zeile Z9, Spalte S7 bis S8, ob der aktuelle Leitfrequenzistwert dem unteren Grenzwert $f_{min}$ entspricht, bei positiver Antwort gemäß Spalte S7 der Leitfrequenzistwert für den folgenden Bearbeitungszyklus n+1 unverändert gelassen, d.h.

$$f_{L2}(n + 1) \;=\; f_{L2}(n)\,,$$

andernfalls bei negativer Antwort gemäß Spalte S8 vom Wert $f_{max}$ auf den Nennwert erniedrigt, d.h.

$$f_{L2}(n + 1) \;=\; f_N\,.$$

Bei dieser Ausführungsform wird somit vergleichbar mit einer Modulation durch einen Dreipunktregler der neu generierte Leitfrequenzistwert $f_{L2}$ pro Bearbeitungszyklus gegebenenfalls zwischen den Grenzwerten $f_{min}$, $f_{max}$ des Regelbereiches des jeweiligen Rundsteuersenders und dem Nennwert $f_N$ der Leitfrequenz pulsartig hin- und hergeschaltet.

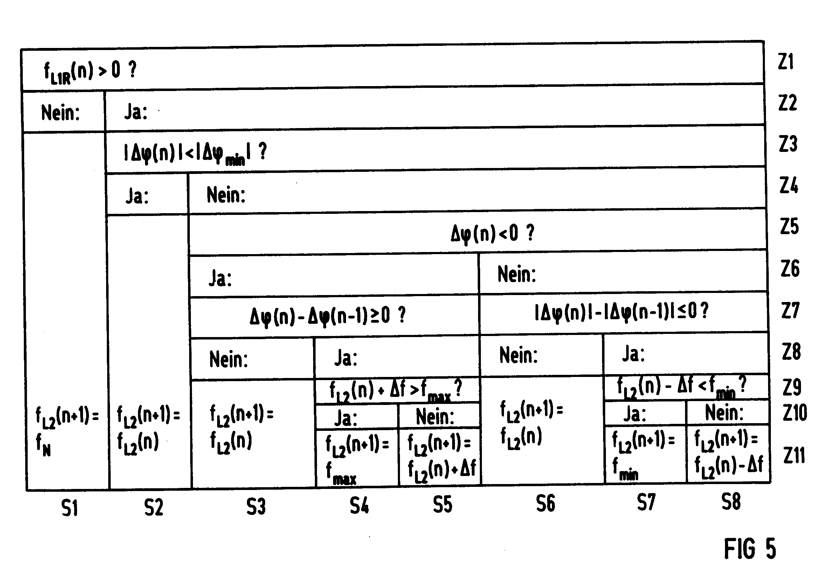

Im Vergleich dazu wird bei einer zweiten, besonders vorteilhaften Ausführungsform des Sollwertgebers SB der Wert des Betrages $\Delta f$ erheblich kleiner und gerade so groß gewählt, daß er dem Wert des kleinstmöglichen Stellschrittes entspricht, um den der interne Leitfrequenzgenerator LG den Wert der neu generierten Leitfrequenz $f_{L2}$ erhöhen bzw. erniedrigen kann. In diesem Fall erfolgt gemäß der dazugehörigen FIG 5, Zeile Z11, Spalten S5 bzw. S8 eine Erhöhung bzw. Erniedrigung des neu generierten Leitfrequenzistwertes $f_{L2}(n+1)$ im folgenden Bearbeitungszyklus nur dann, wenn gemäß den Fragen in FIG 5, Zeile Z7, d.h.

$$\Delta\varphi\,(n) \,-\, \Delta\varphi\,(n - 1) \geqq 0\,?$$

bzw.

$$|\Delta\varphi(n)| - |\Delta\varphi(n-1)| \leqq 0 ?$$

die aktuelle Phasenabweichung $\Delta\varphi(n)$ im Vergleich zur Phasenabweichung $\Delta\varphi(n-1)$ des vorangegangenen Bearbeitungszyklusses unverändert geblieben ist oder sogar weiter zu- bzw. abnimmt.

Wird bei einer derartigen Erhöhung bzw. Erniedrigung die obere bzw. untere Grenze des Regelbereiches des Rundsteuersenders erreicht, d.h. die Fragen in Zeile Z9, Spalten S4 bis S5 bzw. S7 bis S8 jeweils positiv beantwortet, so werden die Änderungen des neu generierten Leitfrequenzistwertes auf diese Grenzen begrenzt, d.h. gemäß Spalte S4 bzw. S7

$$f_{L2}(n+1) = f_{max}$$

bzw.

$$f_{L2}(n+1) = f_{min}$$

gesetzt.

Wird dagegen aufgrund einer im vorangegangenen Bearbeitungszyklus n-1 erfolgten Erhöhung bzw. Erniedrigung des Leitfrequenzistwertes $f_{L2}(n-1)$ eine Vorzeichenumkehr in der jeweiligen Phasenabweichung detektiert, d.h. daß eine vorhandene Phasenvor- bzw. -nacheilung abnimmt, so bleibt gemäß FIG 5, Zeile Z11, Spalten S3 bzw. S6 der Leitfrequenzistwert im folgenden Bearbeitungszyklus unverändert, d.h.

$$f_{L2}(n+1) = f_{L2}(n).$$

Die Abfragen und Entscheidungen in den Zeilen Z1 bis Z6 der Flußdiagramme von FIG 3, 4 und 5 sind identisch.

Die zweite Ausführungsform des Sollwertgebers hat den besonderen Vorteil, daß die Größen $f_L^*$ und $f_{L2}$ aufgrund des kleinen Wertes von $\Delta f$ pro Bearbeitungszyklus nur um eine kleine Stufenhöhe geändert werden. Die Änderung des neu generierten Leitfrequenzistwertes ist somit pro Bearbeitungszyklus so gering, daß sie von der Frequenzregelung des Rundsteuersenders in jedem Fall mühelos ausgeglichen werden kann.

Eine besonders vorteilhafte Ausführungsform der Fragen und Entscheidungen von FIG 5, Zeilen Z7 bis Z11 und den dazugehörigen Spalten S3 bis S8 ist in der FIG 6 dargestellt. Der Funktionsumfang der dortigen Elemente entspricht dabei im wesentlichen den Elementen Sollwertbildner SB und interner Leitfrequenzgenerator LG im Blockschaltbild der FIG 2. In FIG 6 wird die aktuelle Phasenabweichung $\pm\Delta\varphi(n)$ zunächst einem Phasengradientendetektor GD zugeführt. Dieser erkennt gemäß der Fragen in FIG 5, Zeile Z7, ob eine aktuelle Phasenvor- bzw. -nacheilung im Bearbeitungszyklus n gegenüber dem vorangegangenen Bearbeitungszyklus n-1 trotz einer Veränderung des Sollwertes $f_L^*$ um den Betrag $\Delta f$ weiter zugenommen hat oder gleich geblieben ist. Als Folge davon wird ein Steuerwortregister SW unverändert gelassen, bzw. um eine Wertigkeit erhöht bzw. erniedrigt. Das in diesem Steuerwortregister SW hinterlegten bevorzugt binäre Steuerwort N entspricht dabei dem Sollwert $f_L^*$ für den internen Leitfrequenzgenerator LG. Die kleinste Wertigkeit dieses Steuerwortes N entspricht dem kleinstmöglichen Stellschritt des internen Leitfrequenzgenerators LG. In einem sich anschließenden Begrenzer BG wird das Steuerwort N daraufhin überprüft, ob es die Grenzen $f_{max}$, $f_{min}$ des Regelbereiches des Rundsteuersenders erreicht hat. Schließlich wird das gegebenenfalls auf diese Grenzen begrenzte Steuerwort N als Sollwert $f_L^*$ in einen taktgetriebenen Zähler BZ geladen. Dieser Zähler BZ entspricht gemeinsam mit einem separaten Taktgeber TG dem internen Leitfrequenzgenerator LG. Zu Beginn eines jeden Bearbeitungszyklusses wird der Zähler mit dem aktuellen Wert des Steuerwortes N geladen und mittels der vom Taktgeber TG erzeugten Impulse dekrementiert. Nach vollständiger Herunterzählung des aktuellen Wertes von N wird am Ausgang BZ ein Impuls erzeugt, welcher einer ganzen bzw. halben Periode des neu generierten Leitfrequenzistwertes $f_{L2}(n+1)$ im neuen Bearbeitungszyklus (n+1) entspricht.

**Patentansprüche**

1. Rundsteuersendeeinrichtung, welche Steuerbefehle (ST) in ein elektrisches Energieversorgungsnetz (SS1,SS2) einspeist, mit

    a) einer Zentralstation (ZS) mit einem ersten Leitfrequenzgenerator (LG1) zur Vorgabe eines Leitfrequenzistwertes $(f_{L1})$,
    b) mindestens einer Übertragungseinrichtung (ÜS;SE,EE), welche den Leitfrequenzistwert $(f_{L1})$ bevorzugt gemeinsam mit den Steuerbefehlen (ST) überträgt und reproduziert $(FR,f_{L1R})$, und
    c) mindestens einer Unterstation (US) mit mindestens zwei parallelen Rundsteuersendern (RS1,RS2), welche jeweils über interne, abstimmbare Tonfrequenzgeneratoren (TG1,TG2) verfügen,
    **dadurch gekennzeichnet**, daß
    d) pro Unterstation (US) jeweils ein zweiter Leitfregenzgenerator (LG2) vorhanden ist, welcher durch den reproduzierten Leitfrequenzistwert $(f_{L1R})$ am Ausgang der Übertragungseinrichtung (ÜS) synchronisiert wird und diesen zur Übergabe an die mindestens zwei parallelen Rundsteuersender (RS1,RS2) so neu generiert ($f_{L2}$), daß darin nur Phasen- bzw. Frequenzabweichungen enthalten sind, welche innerhalb des Regelbereiches ($f_{max}$,$f_{min}$) der Tonfrequenzgeneratoren (TG1,TG2) der Rundsteuersender (RS1,RS2) liegend von diesen zur Erzeugung der Rundsteuertonfrequenz phasensprunglos ausgeglichen werden können (FIG 1).

2. Vorrichtung nach Anspruch 1, **dadurch gekennzeichnet**, daß der Leitfrequenzgenerator (LG2) zur phasensprunglosen Neugenerierung eines reproduzierten Leitfrequenzistwertes, enthält

a) einen internen Leitfrequenzgenerator (LG), welcher abhängig von einem Sollwert ($f_L^*$) den Leitfrequenzistwert ($f_{L1R}$) zur Ansteuerung der Rundsteuersender neu generiert,

b) einen Phasendetektor (PD) zur Erfassung der Phasenabweichung ($\pm\Delta\varphi$) des neu generierten Leitfrequenzistwertes ($f_{L2}$) vom reproduzierten Wert ($f_{L1R}$), und

c) Mittel (SB) zur Bildung des Sollwertes ($f_L^*$) des internen Leitfrequenzgenerators (LG), welche bei Vor- bzw. Nacheilung der Phasenabweichung ($\pm\Delta\varphi$) den Sollwert ($f_L^*$) für den internen Leitfrequenzgenerator zur Synchronisierung jeweils um einen Betrag ($\Delta f$) nur so erniedrigen bzw. erhöhen, daß der neu generierte Leitfrequenzistwertes ($f_{L2}$) innerhalb des Regelbereiches ($f_{max}$,$f_{min}$) der Tonfrequenzgeneratoren (TG1,TG2) der Rundsteuersender liegt und von diesen zur Erzeugung der Rundsteuertonfrequenz phasensprunglos eingestellt werden kann (FIG 2,3).

3. Vorrichtung nach Anspruch 2, **dadurch gekennzeichnet**, daß bei den Mitteln (SB) zur Bildung des Sollwertes ($f_L*$) für den internen Leitfrequenzgenerator (LG) der Betrag ($\Delta f$) dem Abstand des oberen Grenzwertes ($f_{max}$) des Regelbereiches des Rundsteuersenders vom Frequenznennwert ($f_N$) bzw. dem Abstand des Frequenznennwertes ($f_N$) vom unteren Grenzwert ($f_{min}$) des Regelbereiches des Rundsteuersenders entspricht.

4. Vorrichtung nach Anspruch 2, **dadurch gekennzeichnet**, daß bei den Mitteln (SB) zur Bildung des Sollwertes ($f_L*$) für den internen Leitfrequenzgenerator (LG)

a) der Betrag ($\Delta f$) dem Wert eines kleinst möglichen Stellschrittes (N + 1,N - 1) für den internen Leitfrequenzgenerator (LG) entspricht, und

b) der Sollwert ($f_L^*$) für den internen Leitfrequenzgenerator (LG) um den Betrag nur dann erniedrigt bzw. erhöht wird, wenn trotz einer vorangegangenen Erniedrigung bzw. Erhöhung jeweils die Vor- bzw. Nacheilung der Phasenabweichung unverändert ist oder weiter zunimmt (FIG 2,3,5,6).

5. Vorrichtung nach einem der Ansprüche 2 bis 4, **dadurch gekennzeichnet**, daß bei den Mitteln (SB) zur Bildung des Sollwertes ($f_L*$) für den internen Leitfrequenzgenerator (LG) bei vorübergehendem Verschwinden des ursprünglichen Leitfrequenzistwertes ($f_{L1R}$;$f_{L1R1}$,$f_{L1R2}$) der Sollwert ($f_L^*$) für den internen Leitfrequenzgenerator (LG) einem vorgegebenen Wert gleichgesetzt wird, insbesondere einem Leitfrequenznennwert ($f_N$) (FIG 3,4,5).

6. Vorrichtung nach einem der Ansprüche 2 bis 5, **dadurch gekennzeichnet**, daß bei den Mitteln (SB) zur Bildung des Sollwertes ($f_L*$) für den internen Leitfrequenzgenerator (LG) der Sollwert ($f_L^*$) nur dann verändert wird, wenn der Betrag der Phasenabweichung ($|\Delta\varphi|$) einen vorgebbaren Wert ($|\Delta\varphi_{min}|$) überschritten hat (FIG 3,4,5).

## Claims

1. Ripple control transmitting device which feeds control commands (ST) to an electrical power supply system (SS1, SS2), having

(a) a master station (ZS) with a first pilot frequency generator (LG1) for pre-selecting a pilot frequency actual value ($f_{L1}$),

(b) at least one transmitting device (ÜS; SE, EE) which transmits and reproduces (FR, $f_{L1R}$) the pilot frequency actual value ($f_{L1}$) preferably together with the control commands (ST), and

(c) at least one sub-station (US) with at least two parallel ripple control transmitters (RS1, RS2), each of which has internal, tunable audio frequency generators (TG1, TG2) available to it,

characterised in that

(d) for each sub-station (US) there is a respective second pilot frequency generator (LG2) which is synchronised by the reproduced pilot frequency actual value ($f_{L1R}$) at the output of the transmission device (ÜS) and regenerates ($f_{L2}$) this reproduced pilot frequency actual value for transfer to the parallel ripple control transmitters (RS1, RS2), of which there are at least two, so that they only contain phase or frequency deviations which, located within the range of control ($f_{max}$, $f_{min}$) of the audio frequency generators (TG1, TG2) of the ripple control transmitters (RSI, RS2), can be compensated by the latter without phase shift for generating the ripple control audio frequency (Figure 1).

2.  Device according to claim 1, characterised in that the pilot frequency generator (LG2), for the regeneration of a reproduced pilot frequency actual value without phase shift, comprises

    (a) an internal pilot frequency generator (LG) which regenerates the pilot frequency actual value ($f_{L1R}$) in dependence upon a desired value ($f_L^*$), for driving the ripple control transmitters,

    (b) a phase detector (PD) for determining the phase deviation ($\pm\Delta\varphi$) of the regenerated pilot frequency actual value ($f_{L2}$) from the reproduced value ($f_{L1R}$), and

    (c) means (SB) for forming the desired value ($f_L^*$) of the internal pilot frequency generator (LG), which means (SB), in the case of the respective leading and lagging of the phase deviation ($\pm\Delta\varphi$), respectively lower and raise the desired value ($f_L^*$) for the internal pilot frequency generator by a respective amount ($\Delta f$), for synchronisation, only to such an extent that the regenerated pilot frequency actual value ($f_{L2}$) is within the range of control ($f_{max}$, $f_{min}$) of the audio frequency generators (TG1, TG2) of the ripple control transmitters and can be adjusted by the latter without phase shift for generating the ripple control audio frequency (Figures 2, 3).

3.  Device according to claim 2, characterised in that, with the means (SB) for forming the desired value ($f_L^*$) for the internal pilot frequency generator (LG), the amount ($\Delta f$) corresponds, respectively, to the distance of the upper limit value ($f_{max}$) of the range of control of the ripple control transmitter from the frequency nominal value ($f_N$) and to the distance of the frequency nominal value ($f_N$) from the lower limit value ($f_{min}$) of the range of control of the ripple control transmitter.

4.  Device according to claim 2, characterised in that, with the means (SB) for forming the desired value ($f_L^*$) for the internal pilot frequency generator (LG),

    (a) the amount ($\Delta f$) corresponds to the value of the smallest possible control step (N+1, N-1) for the internal pilot frequency generator (LG), and

    (b) the desired value ($f_L^*$) for the internal pilot frequency generator (LG) is respectively lowered and raised by the amount only when, despite a previous lowering or raising, the respective leading and lagging of the phase deviation is unchanged or increases further (Figures 2, 3, 5, 6).

5.  Device according to one of claims 2 to 4, characterised in that, with the means (SB) for forming the desired value ($f_L^*$) for the internal pilot frequency generator (LG), in the case of the temporary disappearance of the original pilot frequency actual value ($f_{L1R}$; $f_{L1R1}$, $f_{L1R2}$), the desired value ($f_L^*$) for the internal pilot frequency generator (LG) is equated with a pre-selected value, in particular a pilot frequency nominal value ($f_N$) (Figures 3, 4, 5).

6.  Device according to one of claims 2 to 5, characterised in that, with the means (SB) for forming the desired value ($f_L^*$) for the internal pilot frequency generator (LG), the desired value ($f_L^*$) is changed only when the amount of the phase deviation ($|\Delta\varphi|$) has exceeded a pre-selected value ($|\Delta\varphi_{min}|$) (Figures 3, 4, 5).

**Revendications**

1.  Dispositif émetteur de télécommande centralisée, qui introduit des instructions de commande (ST) dans un réseau d'alimentation en énergie électrique (SS1, SS2) comportant

    a) un poste central (ZS) présentant un premier générateur de fréquence pilote (LG1) servant à prédéterminer une valeur réelle ($f_{L1}$) de la fréquence pilote,

    b) au moins un dispositif de transmission (ÜS; SE, EE) qui transmet et reproduit (FR, $f_{L1R}$) la valeur réelle ($f_{L1}$) de la fréquence pilote, de préférence en commun avec les instructions de commande (ST), et

    c) au moins un poste secondaire (US) comportant au moins deux émetteurs parallèles de télécommande centralisée (RS1,RS2), qui disposent respectivement de générateurs internes accordables de fréquences vocales (TG1,TG2),

caractérisé par le fait que

d) dans chaque poste secondaire (US) est prévu un second générateur de fréquence pilote (LG2) qui est synchronisé par la valeur réelle reproduite ($f_{L1R}$) de la fréquence pilote, à la sortie du dispositif de transmission (ÜS) et produit à nouveau ($f_{L2}$) cette fréquence pilote pour sa retransmission aux émetteurs parallèles de télécommande centralisée (RS1,RS2), prévus au moins au nombre de deux, de telle sorte que ces derniers présentent uniquement des écarts

de phase ou de fréquence qui, se situant à l'intérieur de la gamme de régulation ($f_{max}$, $f_{min}$) des générateurs de fréquences vocales (TG1,TG2) des émetteurs de télécommande centralisée (RS1,RS2), peuvent être compensés sans saut de phase par ces derniers pour la production de la fréquence vocale de télécommande centralisée (figure 1).

2. Dispositif suivant la revendication 1, caractérisé par le fait que le générateur de fréquence pilote (LG2) servant à produire à nouveau, sans saut de phase, une valeur réelle reproduite de la fréquence pilote, comporte

a) un générateur interne de fréquence pilote (LG), qui produit à nouveau, en fonction d'une valeur de consigne ($f_L*$) la valeur réelle ($f_{L1R}$) de la fréquence pilote pour la commande de l'émetteur de télécommande centralisée,

b) un détecteur de phase (PD) servant à détecter l'écart de phase ($\pm\Delta\varphi$) de la valeur réelle nouvellement produite ($f_{L2}$) de la fréquence pilote par rapport à la valeur reproduite ($f_{L1R}$), et

c) des moyens (SB) pour former la valeur de consigne ($f_L*$) du générateur interne de fréquence pilote (LG), qui, lors d'une avance ou d'un retard de l'écart de phase ($\pm\Delta\varphi$), réduisent ou augmentent respectivement d'une valeur absolue ($\Delta f$) la valeur de consigne ($f_L*$) pour le générateur interne de fréquence pilote pour la synchronisation, seulement au point que la valeur réelle nouvellement produite ($f_{L2}$) de la fréquence pilote se situe à l'intérieur de la gamme de régulation ($f_{max}$, $f_{min}$) des générateurs de fréquences vocales (TG1, TG2) des émetteurs de télécommande centralisée et peut être réglée sans saut de phase par ces derniers pour la production de la fréquence vocale de télécommande centralisée (figures 2, 3).

3. Dispositif suivant la revendication 2, caractérisé par le fait que dans les moyens (SB) servant à former la valeur de consigne ($f_L*$) pour le générateur interne de fréquence pilote (LG), la valeur absolue ($\Delta f$) correspond à la distance entre la valeur limite supérieure ($f_{max}$) de la gamme de régulation de l'émetteur de télécommande centralisée et la valeur nominale ($f_N$) de la fréquence ou l'écart entre la valeur nominale ($f_N$) de la fréquence et la valeur limite inférieure ($f_{min}$) de la gamme de régulation de l'émetteur de télécommande centralisée.

4. Dispositif suivant la revendication 2, caractérisé par le fait que dans les moyens (SB) servant à former la valeur de consigne ($f_L$) pour le générateur interne de fréquence limite (LG),

a) la valeur absolue ($\Delta f$) correspond à la valeur d'un pas de réglage aussi petit que possible (N + 1, N - 1) pour le générateur interne de fréquence pilote (LG), et

b) la valeur de consigne ($f_L*$) pour le générateur interne de fréquence pilote (LG) est réduite ou augmentée de ladite valeur uniquement lorsque, en dépit d'une réduction ou d'une augmentation précédente, respectivement l'avance ou le retard de l'écart de phase est inchangé ou continue à augmenter (figures 2, 3, 5, 6).

5. Dispositif suivant l'une des revendications 2 à 4, caractérisé par le fait que, dans les moyens (SB) servant à former la valeur de consigne ($f_L*$) pour le générateur interne de fréquence pilote (LG), lors de la disparition transitoire de la valeur réelle initiale ($f_{L1R}$; $f_{L1R1}$, $f_{L1R2}$) de la fréquence pilote la valeur de consigne ($f_L*$) pour le générateur interne de fréquence pilote (LG) est réglée égale à une valeur prédéterminée, notamment à une valeur nominale ($f_N$) de la fréquence pilote (figures 3, 4, 5).

6. Dispositif suivant l'une des revendications 2 à 5, caractérisé par le fait que, dans les moyens (SB) servant à former la valeur de consigne ($f_L*$) pour le générateur interne de fréquence pilote (LG), la valeur de consigne ($f_L*$) est modifiée uniquement lorsque la valeur absolue de l'écart de phase ($|\Delta\varphi|$) a dépassé une valeur pouvant être prédéterminée ($|\Delta\varphi_{min}|$) (figures 3, 4, 5).

FIG 1

FIG 2

$f_{L1R}$

PD

$\pm\Delta\varphi$

$\Delta\varphi_{min}$

SB

$f_L^*$

LG

LG2

$f_{L2}$

$f_{max}$

$f_N$

$f_{min}$

FIG 6

$\pm\Delta\varphi(n)$

| $\lvert\Delta\varphi(n)\rvert-\lvert\Delta\varphi(n-1)\rvert \gtreqless 0$ ? | GD |

$\Delta f \longrightarrow$

$+1,0,-1$

SB,LG

| N | SW |

| $f_{min} \le N \le f_{max}$ | BG |

$f_L^* \longrightarrow$

BZ

LG $\longrightarrow$

| Zähler |

TG

$f_{L2}(n+1)$

| | | | | | | |
|---|---|---|---|---|---|---|
| $f_{LIR}(n) > 0$ ? | | | | | | Z1 |
| Nein: | Ja: | | | | | Z2 |
| | $|\Delta\varphi(n)| < |\Delta\varphi_{min}|$ ? | | | | | Z3 |
| | Ja: | Nein: | | | | Z4 |
| | | $\Delta\varphi(n) < 0$ ? | | | | Z5 |
| | | Ja: | | Nein: | | Z6 |
| | | $f_{L2}(n) + \Delta f > f_{max}$ ? | | $f_{L2}(n) - \Delta f < f_{min}$ ? | | Z7 |
| | | Ja: | Nein: | Ja: | Nein: | Z8 |
| $f_{L2}(n+1) = f_N$ | $f_{L2}(n+1) = f_{L2}(n)$ | $f_{L2}(n+1) = f_{max}$ | $f_{L2}(n+1) = f_{L2}(n)+\Delta f$ | $f_{L2}(n+1) = f_{min}$ | $f_{L2}(n+1) = f_{L2}(n)-\Delta f$ | Z9 |
| S1 | S2 | S3 | S4 | S5 | S6 | |

FIG 3

Decision table (FIG 4):

| | S1 | S2 | S3 | S4 | S5 | S6 | S7 | S8 | |
|---|---|---|---|---|---|---|---|---|---|
| $f_{LIR}(n) > 0$ ? | | | | | | | | | Z1 |
| Nein: | Ja: | | | | | | | | Z2 |
| | $\lvert\Delta\varphi(n)\rvert < \lvert\Delta\varphi_{min}\rvert$ ? | | | | | | | | Z3 |
| | Ja: | Nein: | | | | | | | Z4 |
| | | $\Delta\varphi(n) < 0$ ? | | | | | | | Z5 |
| | | Ja: | | | Nein: | | | | Z6 |
| | | $f_{L2}(n) = f_N$ ? | | | $f_{L2}(n) = f_N$ ? | | | | Z7 |
| | | Ja: | Nein: | | Ja: | Nein: | | | Z8 |
| | | | $f_{L2}(n) = f_{max}$ ? | | | $f_{L2}(n) = f_{min}$ ? | | | Z9 |
| | | | Ja: | Nein: | | Ja: | Nein: | | Z10 |
| $f_{L2}(n+1) = f_N$ | $f_{L2}(n+1) = f_{L2}(n)$ | $f_{L2}(n+1) = f_{max}$ | $f_{L2}(n+1) = f_{L2}(n)$ | $f_{L2}(n+1) = f_N$ | $f_{L2}(n+1) = f_{min}$ | $f_{L2}(n+1) = f_{L2}(n)$ | $f_{L2}(n+1) = f_N$ | | Z11 |

FIG 4

EP 0 420 270 B1

EP 0 420 270 B1

| | | | | | | | | |
|---|---|---|---|---|---|---|---|---|
| $f_{L1R}(n) > 0$ ? | | | | | | | | Z1 |
| Nein: | Ja: | | | | | | | Z2 |
| | $|\Delta\psi(n)| < |\Delta\psi_{min}|$ ? | | | | | | | Z3 |
| | Ja: | Nein: | | | | | | Z4 |
| | | $\Delta\psi(n) < 0$ ? | | | | | | Z5 |
| | | Ja: | | | Nein: | | | Z6 |
| | | $\Delta\psi(n) - \Delta\psi(n-1) \geq 0$ ? | | | $||\Delta\psi(n)| - |\Delta\psi(n-1)|| \leq 0$ ? | | | Z7 |
| | | Nein: | Ja: | | Nein: | Ja: | | Z8 |
| | | | $f_{L2}(n) + \Delta f > f_{max}$ ? | | | $f_{L2}(n) - \Delta f < f_{min}$ ? | | Z9 |
| $f_{L2}(n+1) =$ $f_N$ | $f_{L2}(n+1) =$ $f_{L2}(n)$ | $f_{L2}(n+1) =$ $f_{L2}(n)$ | Ja: | Nein: | $f_{L2}(n+1) =$ $f_{L2}(n)$ | Ja: | Nein: | Z10 |
| | | | $f_{L2}(n+1) =$ $f_{max}$ | $f_{L2}(n+1) =$ $f_{L2}(n) + \Delta f$ | | $f_{L2}(n+1) =$ $f_{min}$ | $f_{L2}(n+1) =$ $f_{L2}(n) - \Delta f$ | Z11 |
| S1 | S2 | S3 | S4 | S5 | S6 | S7 | S8 | |

**FIG 5**